Europäisches Patentamt

European Patent Office

Office européen des brevets

(19)

(11) Publication number: **0 100 446**
A1

(12) # EUROPEAN PATENT APPLICATION

(21) Application number: **83106422.5**

(22) Date of filing: **01.07.83**

(51) Int. Cl.³: **G 01 N 21/88**

(30) Priority: **15.07.82 IT 2240182**

(43) Date of publication of application:
**15.02.84 Bulletin 84/7**

(84) Designated Contracting States:
**CH DE FR GB LI SE**

(71) Applicant: **CARBOLOY S.p.A.**
**Via Fabio Filzi 11**
**I-20021 Baranzate di Bollate (MI)(IT)**

(72) Inventor: **Lozar, Boris**
**Via Ronchi 39**
**I-20134 Milan(IT)**

(74) Representative: **Michelotti, Giuliano**
**c/o CGE Via Bergognone, 27**
**I - 20144 Milano(IT)**

(54) **High resolution electronic automatic imaging and inspecting system.**

(57) In a high resolution optical electronic imaging system a blade-shaped light beam (14), emitted by a laser (30), passes through an optical group provided with a cylindrical lens (34), is then directed to a revolving head (38) which contains a mirror system, scanning the beam along the cutting edges (12) of an insert (10), in order to display edge defects (71) at high resolution and contrast. A better focusing system of the blade-shaped light beam (14) on the edges (12) of the said insert (10) is also illustrated.

Fig. 3

- 1 -

High resolution electronic automatic imaging and inspecting system

This invention relates to an imaging system for obtaining a high resolution optical-electronic image of test pieces and, particularly, for producing a high resolution image capable of distinguishing relatively small details, such as defects in hard metal inserts used for machining operations, i.e. turning, milling, planing and the like.

This invention is in particular applicable to the inspection of the cutting-edges of hard metal inserts in order to detect defects, such as chippings, on said cutting edges, to automatically select or classify said inserts.

Particular problems encountered during the production of hard metal inserts are dimensional inspection, detection of defects on the cutting edges, and qualitative classification according to size tolerances and the number of defects defected on the cutting edges.

A first method, used to make this classification, is that of visual measurement, possibly with the aid of optical enlarging instruments and suitable illumination system. Each insert is individually examined and the defects which are revealed enable it to be classified according to the size and the total number of detected defects.

However, the above method has the disadvantage of being    very time consuming and labour intensive, thus increasing significantly the production cost of the inserts.

A second and cheaper method is  that of visually measuring and inspecting the insert        by sampling, i.e. by assigning to each lot of inserts the quality of a sample taken from the lot. This method, although cheaper than the previous one, will give very unreliable results for it is possible that the sample may not be adequately representative of the lot. In many instances the method can be misleading or  inapplicable.

A third method is that of inspecting each individual insert with an automatic measuring, imaging inspection and classification equipment, which is capable of decreasing the total inspection time and labour requirements of the operation

It is an object of this invention to carry out    an automatic inspection system having the above described properties. In order to automate the insert inspection, this    invention uses a type of optical-electronic  system which translates optical images into electric signals. The system can detect defects of different types by adjusting its resolution power.

A number of different approaches tried to increase the resolution power of said optical-electronic system.

A first approach is to use a fixed illumination or lighting system while the inclination of the edge under inspection can be varied to show up defects, by making them as scattering or diffraction centres for the light. Another or second approach is to immerse the insert in some penetrating fluid for not-destructive testing, having a refractive index notably different to that of air. This would make defects clearly visible, especially with selective illumination or a scanning technique.

A third approach is to use a Wood lampe, which would make defects visible through luminescence, while a fourth solution uses ultrasound waves applied to containers containing some fluid with insert, in order to obtain shock waves at the edges, whose emission could vary about the defects acting as perturbation centres for the waves.

All the stated solutions did not give any safe and/or repetible result, and therefore they are to be considered as having no practical worth.

The unique method giving a valid result     able to distinguish defects in the range of the tenth of millimeter on the cutting edges of inserts, is to illuminate the cutting edges of said inserts, resting on a plane and held in the dark, by a blade-shaped light beam which has the minimum width, and therefore the maximum intensity at an area coinciding with the cutting edge to be inspected, and to provide for the relative motion between the said blade-shaped beam and the edge of the insert. Each individual deformation of the edge will result in a perturbating source for the blade-shaped beam which, due to the concentration of luminous energy in its correspondence, will create an easily detectable light contrast, against the remaining portion of the edge, which can be detected and recorded by optical-electronic systems.

In a first embodiment of this invention, the blade-shaped beam is obtained using a laser as light source, and by passing the light so produced through a suitable optical equipment provided with a cylindrical lens forming the blade-shaped beam useful for this invention. A revolving head, containing some mirrors, permit to move     said blade-shaped beam along the edge of the insert to be inspected, while an optical-electronic detector, for example a TV camera equipped with VIDICON tube, will translate the image of the insert edges with its defects into electric signals which can be used for representing said insert edges on a television monitor, giving an image of said edges whereon will particularly stand out the defect indicating spots.

The signals coming from the camera can also be delivered to an electronic processor which will provide to check the insert size and to detect and record the defects on the edges of said inserts, and to classify and select them according to the number of defects as detected for each individual insert. Said classification is useful for rejecting too defective inserts and for the packaging the inserts, having tolerable defects, according to quality groupes, i.e. groups having dimensional tolerances and number of defects falling within selected intervals. In such a way, a complete inspection or checking of the produced inserts and a distribution of the same to quality groupes, are obtained.

In particular, the revolving head used in said first embodiment contains three mirrors which, through three substantially at 90° reflections, allow to make a light, beam previously arranged along an axis passing through the insert, to incide in a grazing and sliding way along the edge of the insert which has to be illuminated.

In a second embodiment of this invention, the insert is supported by a rigid plane of transparent material, for eample glass, and a revolv ing head, containing only two mirrors, is used, one of which produces a reflection angle "$90+\alpha$" and the second one a reflection angle "$2\alpha$". The reflected beam is properly inclined at an angle "$\alpha$" to the support ing plane of the insert, thus allowing an easy coincidence of the focus of the blade-shaped beam with the edges of said insert. In particular, by selecting $\alpha = 30°$, reflection angles of 120° and 60° are obtained respectively.

Moreover, the focusing system is provided by some suitable means to move an optical group supplying said focusing, said means acting in such a way that the distance between optical group and the insert edges remains unchanged, indipendently of the insert size.

According to a preferred embodiment, the distance between the focusing optical group and the revolving head and the distance between the revolving head and the supporting plane of the inserts to be inspected are varied, in such a way that to a variation "h" of the distance between revolving head and supporting plane will correspond a variation "$\frac{h}{\sin\alpha}$" of the distance between optical group and revolving head.

In particular, by selecting $\alpha = 30°$, to a variation "h" of the distance between revolving head and supporting plane, will correspond a variation "2h" between optical group and revolving head.

A specially simple manner for attaining the above mentioned distance variations, is to use a type of hollow sleeve bearing the optical group, equipped with two opposite direction threads having different pitches which will allow a movement of the optical group to a direction, and that of the revolving head to an opposite direction wherein, called "f" the pitch of the thread allowing the movement of the optical set, and "F" the pitch of the thread allowing the movement of the revolving head, the ratio between the said pitches is given by the formula:

$$f = F(1 - \sin\alpha).$$

Finally, in the special case wherein $\alpha = 30°$, it results:

$$f = \frac{1}{2} F$$

that is the thread pitch allowing the movement of the optical set is one-half of the pitch of the thread allowing the movement of the revolv ing head.

This invention will be better understood from the following description of some embodiments in conjunction with the accompanying drawings, wherein:

Figures 1 and 2 show, partially, in profile and in plane, respectively, a hard metal insert illuminated by a blade-shapped light beam according to the imaging system of this invention.

Figure 3 shows a first apparatus for embodying this invention.

Figures 4 and 5 are two photos of images of cutting edges of inserts taken by the use of the imaging system of this invention.

Figure 6 shows a second apparatus for embodying this invention.

Figure 7 illustrates in detail the principle for adapting the apparatus to the inspection of inserts of different sizes still maintaining unchanged the distance between the optical group and the axis of the light beam of the Figure 6 apparatus.

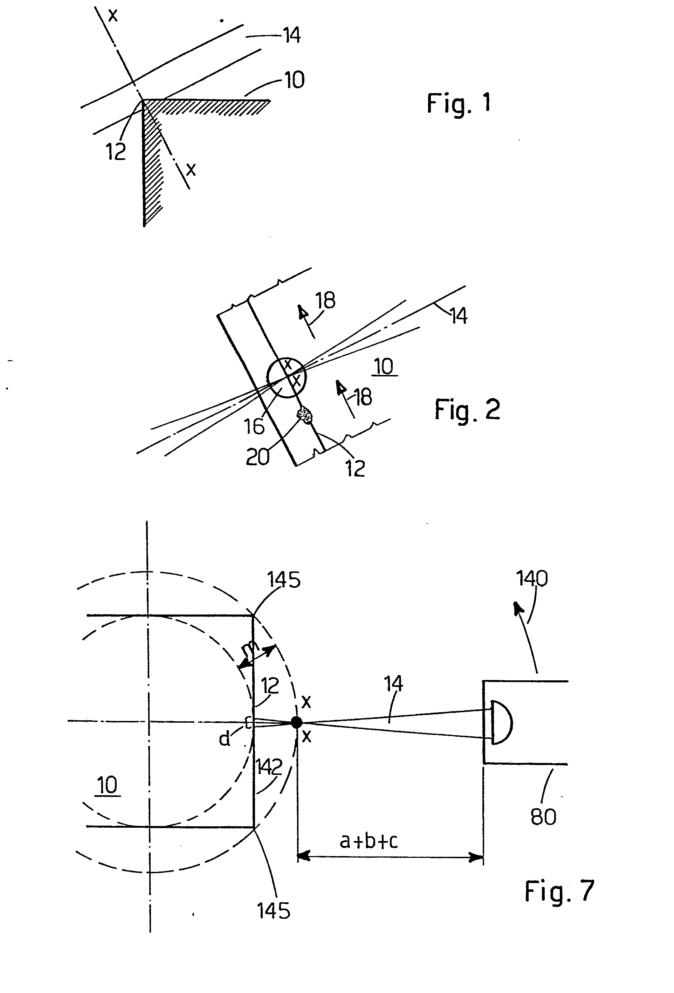

Now considering in particular Figures 1 and 2, it can be observed that for defect detection on an hard metal insert 10, provided with a cutting edge 12, said insert is held in the dark and a blade-shaped light beam 14 is used, having its minimum width on an axis X-X perpendicular to the propagation direction of same beam and located within a region 16 centered on said cutting edge 12. Said beam 14 is moved according to a direction, indicated by arrows 18, parallel to the cutting edge 12 and then it is diffracted or scattered by said edge 12 according to known optical laws. A defect on the edge, such as a chipping 20, will form a substantial deviation from the geometrical form of the cutting edge 12 which will bring to a substantial variation of the diffraction phenomena of the ray 14 by said edge 12. Owing to the concentration of light energy along the axis X-X, this variation of the diffraction phenomena will produce an easily detectable light contrast on the insert dark bottom. A photo, taken of the insert illuminated by the said light beam 14 sliding on a cutting edge 12, represents the image of the said cutting edge from which stand out the defects.

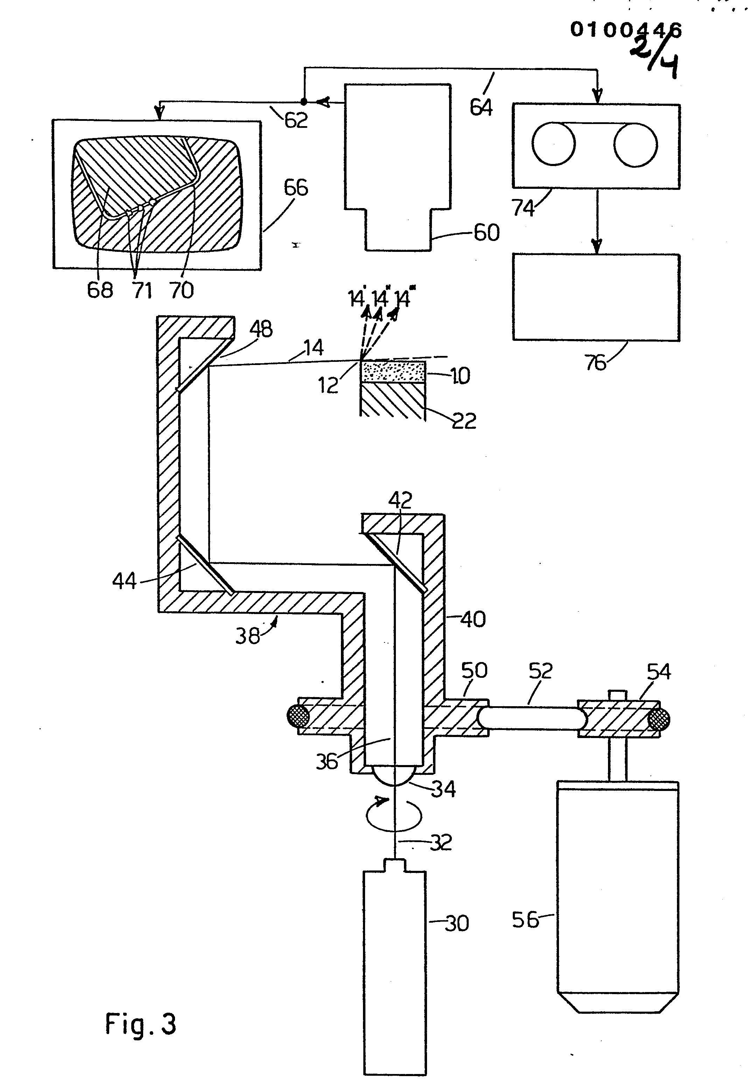

A first embodiment of this invention is illustrated in Figure 3 showing an apparatus to inspect by grazing and sliding light the cutting edges of hard metal inserts. In said apparatus, a light source, such as a laser 30, emits a light beam 32 which is shaped as a blade by means of a cylindrical lens 34, being a part of the optical system or group equipping said source 30. The beam 36 coming from the cylindrical lens 34 enters a revolving head 38 having the purpose to move a light beam 14 coming from said revolving head 38 on a cutting edge 12 of an insert 10 fastened to a fixed support 22.

The revolving head 38 comprises a hollow sleeve or spindle 40 through which passes the beam 36 to impinge on a first mirror 42 which along with additional mirrors 44 and 48 will contribute to deliver said beam as a beam 14 sliding and grazing along the cutting edge 12 of the insert 10.

The movement of the revolving head 38 is provided by a pulley 50 connected through a belt 52 to another pulley 54 keyed onto the shaft of an electric motor 56.

The light beam 14 is scattered by the cutting edge 12 and by its defects, according to the know laws of the diffraction, giving some diffracted or scattered beams 14', 14", 14"',... Said diffracted beams are detected by an image detector 60, for example a TV camera. The signals coming from said camera 60 are delivered through a first line 62 to a television monitor 66 and through a second line 64 to an electronic processing unit 74, which executes the dimensional checking and the counting of the defects on the cutting edges of the inserts, and moreover the classification of the same. Some additional apparatus 76, not being a part of this invention, can be used for proper packaging of the classified inserts. The monitor screen 66 shows an image 68 of the insert wherein are specifically marked the image 70 of the cutting edge and the images 71 of the defects, such as chippings, on said cutting edge.

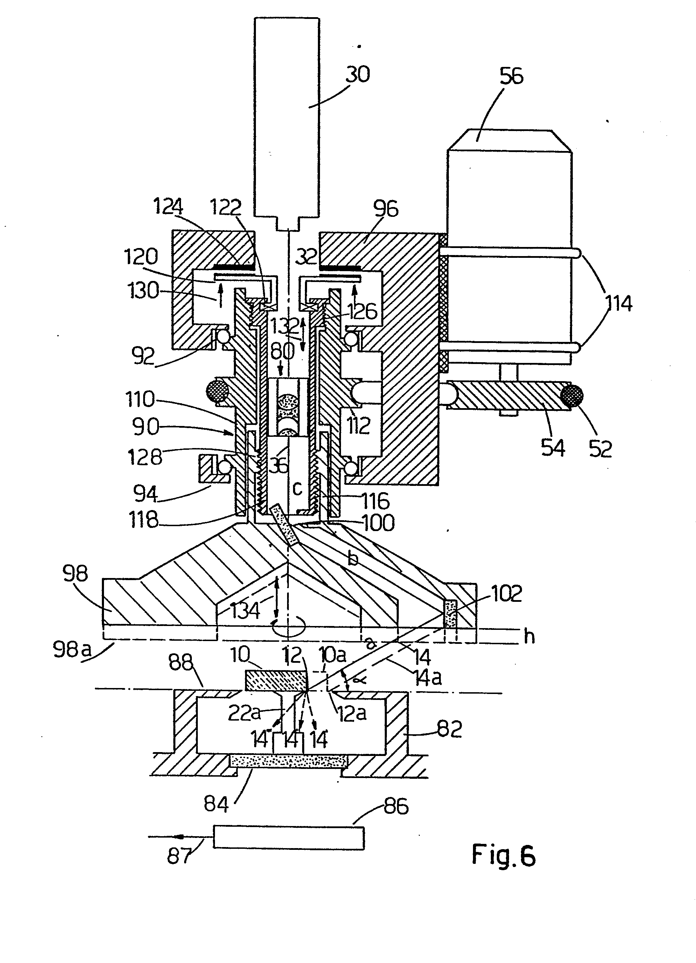

The Figure 4 and 5 are photograms of the images on the television monitor, respectively concerning a square insert and a round insert, wherein are particularly visible the cutting edges of said inserts and their defects.

A second embodiment of this invention is illustrated on Figure 6, and it represents an improved apparatus for the inspection of cutting edges of inserts by means of sliding and grazing light. Said apparatus comprises a light source, such as a laser 30 which emits a light beam 32, passing through a system of lens or optical group 80, containing also a cylindrical lens, to produce through the beam 36, from which it comes, the blade-shaped beam 14 required to be used for the sliding illumination or lightin of a cutting edge 12 of an insert 10 to be inspected. Said insert 10 is supported by a support 22a which, in turn, is supported by a transparent plate 84, resting against a support 82, defining a reference plane 88 on which lays the cutting edge 12 of the insert 10. An image detector 86 is located under said transparent plate 84, to provide the dimensional stability of the images against temperature, and also insensitiveness to mechanical vibrations; preferably it is of the solid state type (charge coupled image detector).

The optical group 80 is housed within a revolving assembly 90 mounted by means of two ball bearings 92 and 94 on a stationary support 96. A bell type head 98, revolving with the unit 90, bears two mirrors 100 and 102 the purpose of which is to reflect the blade-shaped beam 36 for making it fall down as sliding and grazing beam 14 on the cutting edge 12 of the insert 10. The light of said blade-shaped beam is diffracted, according to the defects detected on the cutting edges 12, into beams 14', 14", 14"',..., which are collected by the image detector 86, which through a line 87 will send the corresponding electric signals to the connected equipment.

The revolving assembly 90 comprises a first outer sleeve or hollow spindle 110 equipped with a pulely 112 moved by a belt 52 engaging also a pulley 54 keyed on the shaft of an electric motor 56 secured by suitable means, such as the brackets 114, to the stationary support 96.

A second intermediate sleeve 116 integral with the bell shaped head 98 is internally and coaxially located within said sleeve 110, while a third internal sleeve 118 is integral with the optical group 80 and usually is moved along with the other two sleeves. A disc brake 120 equipped with a central sleeve ending with a crown gear 122 is engage able against a pad 124, secured to the support 96, to stop internal sleeve 118 for the purposes hereafter illustrated. Said internal sleeve 118 is equipped with one external upper thread 126 having a first pitch "f" and threading into a corresponding internal thread of the outer sleeve 110 and with a second outer lower thread 128, having a pitch "F" larger than the pitch "f", and threading into a corresponidng internal thread of the intermediate sleeve 116.

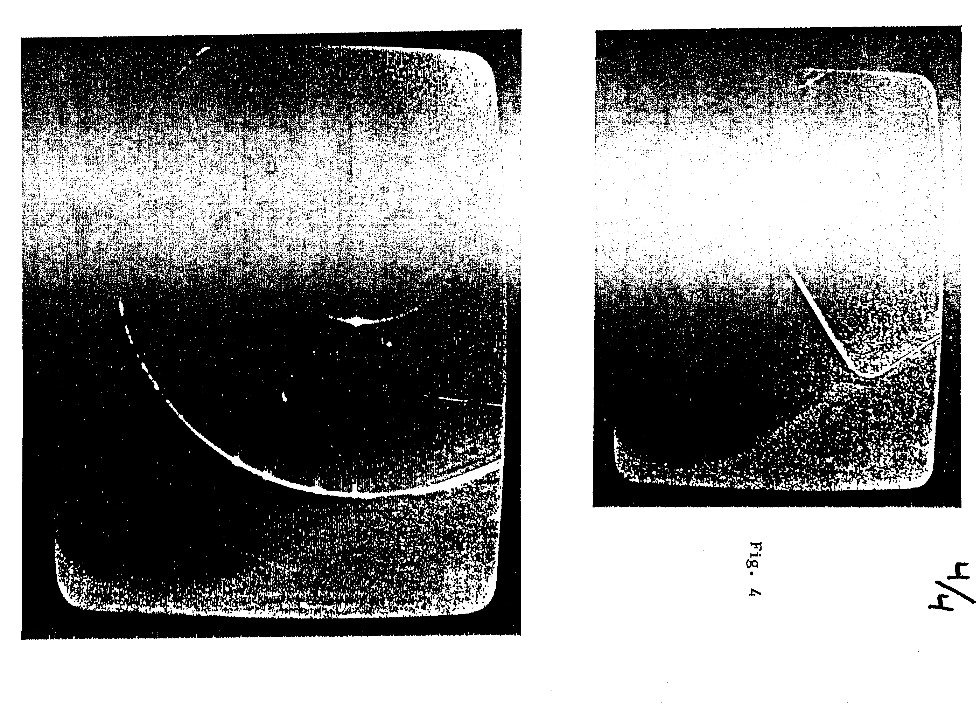

Now, with reference to Figure 7 showing a plane and schematic view of a no-round insert 10 illuminated by a light blade 14 coming from an optical group 80, due to the revolving motion of the mirrors 100 and 102, shown on Figure 6, the optical group 80 operates as if is revolving about the insert 10 according to the arrow 140. Consequently, the light blade 14 will scan all the cutting edges of the insert 10 and, owing to the no-round shape of the insert, the distance between the optical group 80 and the insert 10 will vary of a value "m" equal to the difference of the distance between the optical group 80 and the centre of the flat portion 142 of the cutting edge 12 and the distance between said optical group 80 and the corners 145 of said cutting edge 12. Accordingly, the light blade 14 when encounters the cutting edge 12 has a thickness "d" varying along the flat portion 142 of the cutting edge 12 up to decrease to a minimum value at the corners 145. As the smaller is the thickness "d" of the light blade, the higher is the light intensity of the light blade 14 on the cutting edge 12 and, therefore, the higher is the image resolution, it is important that the location of axis X-X will occur at the corners 145 of the cutting edges 12, since the probable chippings on said edges have an higher importance than the ones on the flat portions of the cutting edge 12, such as the portion 142.

Now, since through this imaging system inserts, having different dimensions, are to be inspected, it is necessary to operate in such a way that said location of the axis X-X will always occur on the corners 145 of the cutting edge 12, independently of the dimensions of the inspected insert.

In order to make the axis X-X always falling onto the edges of the inserts, it is necessary to change the focusing distance of the optical group 80, a problematic procedure, owing to the shape of the light ray 14, or to keep unchanged the focusing distance of the optical group 80 and to move it with respect to the insert 10 for accounting of its dimensions. Naturally, owing to its simplicity the latter solution is preferred.

Now refering to both    Figures 6 and 7, it can be observed that the focusing distance of the optical set 80 is given by the sum of portions a, b and c. When the insert 10 is replaced by an insert 10a of a larger dimensions, the bell 98 shall be lowered by a portion "h", bringing it to position 98a, in such a manner that the blade-shaped beam (now 14a) will graze the cutting edge 12a of the new insert. However, since the blade-shaped beam 14 is inclined by an angle $\alpha$ with respect to the reference plane 88, the distance a will decrease by a portion $\dfrac{h}{\sin\alpha}$ . In order to maintain unchanged the focusing distance given by a + b + c, the distance c shall be increased by a portion equal to $\dfrac{h}{\sin\alpha}$ . This is obtained through the above mentioned system having three threaded and coaxial sleeves 110, 116 and 118.

In order to change the distance c and at the same time, to lower the bell 98, is used the disc brake 120 which is located internally the revolving assembly 90. By exerting a force according to the arrow 130 on the disc brake 120, it is engaged against a pad 124 secured on the stationary support 96, thus stopping the disc 120 and, accordingly preventing the revolving of the internal sleeve 118 which is engaged with the crown gear 122 of the disc brake 120. Now, by slowly rotating, for example manually, the revolving unit 90, the internal sleeve 118 cannot rotate together with the outer sleeve 110 and, accordingly, owing to the upper thread 126, it will move axially in respect to it, for example by lifting up itself. At the same time, the intermediate sleeve 116, which is entrained in rotation by the outer sleeve 110, owing to the lower threads 128, will move axially with respect to the internal sleeve 118 in opposite direction, for example by lowering down itself. Since the thread 128 has a pitch "F" larger than that of the thread 126, the intermediate sleeve 116 is subject to a lifting motion due to the thread 126 and a lowering motion due to the thread 128, and it will lower down for a portion proportional to "F-f", the pitch difference between the threads, while the intermediate sleeve 116 will move away from the internal sleeve 118 for a portion proportional to the pitch "F" of the thread 128. Therefore, in order to change the distance c of a portion equal to $\frac{h}{\sin \alpha}$ , by changing the position of the bell 98 of a portion h, it is necessary that the upper thread 126 will rotate oppositely with respect to the lower thread 128, that the pitch "f" of the upper thread 120 and the pitch "F" of the lower thread 128 will result from a relation given by the formula:

(1)    $f = F(1 - \sin \alpha)$,

where $\alpha$ is the angle established between the blade-shaped ray 14 and the reference plane 88, and that between the pitch "F" and the necessary movement h of the bell 98 exists the following relation:

(2)    $NF = \frac{h}{\sin \alpha}$

where N is the turn number to be run by the revolving unit 90 for attaining said movement h.

In particular, it can be observed that the movement of the bell 98 is given by the formula:

(3)    $NF - Nf$

that is, by considering the previous formulae (1) and (2),

(4)    $NF - Nf = \frac{h}{\sin \alpha} - \frac{h}{\sin \alpha} (1 - \sin \alpha)$

where by developping the previous formula one obtains:

$NF - Nf = \frac{h}{\sin \alpha} (1 - 1 + \sin \alpha)$ and by reducing the expression between the brackets the hereunder formula is attained:

(5)    $NF - Nf = \frac{h \sin \alpha}{\sin \alpha} = h.$

It means that for a preselected number of turns N of the revolving unit 90 having the disc brake 120 stopped, the bell 98 will move in respect to the reference plane 88 by a portion equal to h, while the distance c will change by a portion equal to $\frac{h}{\sin \alpha}$ . By a proper selection of the value of the angle $\alpha$ , for example 30°, being

$\sin 30° = \frac{1}{2}$, it results that when the bell 98 is moved by a portion h the distance c will change by a portion $h/\frac{1}{2} = 2h$ and the ratio between the pitches f and F 126 and 128 respectively becomes:

$$(1') \quad f = F(1 - \sin 30°) = F(1 - \frac{1}{2}),$$

$$f = \frac{1}{2} F$$

it means that the pitch f will be just one half of the pitch F.

Of course, this system for moving axially the two sleeves 116 and 118 can be replaced by equivalent means, such as for example, a mechanism comprising gear wheels and racks having different pitches, or by two threads having a similar pitch and actuated by two different movements imparting different turn numbers to each one, etc. To this purpose can be used mechanisms having computer controlled stepping electric motors in order to automate the fitting of the blade-shaped beam 14 to the dimensions of insert 10, being said systems known in the prior art, and operating in an equivalent way as the above disclosed coaxial sleeve system.

– 14 –

Claims

1. An imaging system for shape dimensional inspection and for defect detection on edges of small articles, such as the cutting edges of hard metal inserts are used in machining operations, characterized in that said inserts (10) are supported by a plane, are kept in the dark, are illuminated along their cutting edges (12) by an inclined blade shaped light beam (14) having a minimum width, and therefore a maximum intensity, at an area (16) coincident with the cutting edge (12) to be inspected and a relative motion of said blade-shaped light beam along said edge (12) of the insert is provided, being the light diffused or scattered by said edge (12) collected by light detecting electronic means (60, 86), wherein each defect (20) of said edge will become a source of perturbations of the blade-shaped beam (14) which, owing to the concentration of light energy in its correspondence, will create a light contrast, in respect to the remaining part of the edge, which can easily be detected and recorded by said electronics means.

2. An imaging system according to Claim 1, characterized in that a light source, as a laser (30) equipped with an optical equipment provided with a cylindrical lens (34) for allowing the formation of the blade-shaped beam (14), a revolving head (38) for making run said beam (14) along said edge (12) of the said insert (10) are used, said revolving head (38) comprising a mirror system (42, 44, 48) for delivering the blade-shaped beam (14) with a limited inclination angle against said edge (12), a detector (60), of the TV camera type, collecting the light diffused or scattered by said edge (12) and by its possible defects and delivering signals, which correspond to said diffused light, to an imaging system (66), reproducing an enlarged image of said insert, and to a computer (74) providing for the dimensional inspection processing  the defect counting and the insert classification according to dimensional tolerances  and the number of said defects.

3. An imaging system according to Claim 2, characterized in that said revolving head (38) is moved by an adjustable speed motor (56).

4. An imaging system according to Claim 1, characterized in that a blade-shaped light beam · (36) is introduced into a revolving head (98) equipped with two mirrors (100, 102) in order to make said blade-shaped beam (14), coming from said blade-shaped beam (36), incide against the edge (12) of an insert (10)with a given inclination corresponding to an angle between     said blade-shaped beam (14) and a supporting plane (88) of said insert (10), said two mirrors (100, 102) transform ing said light beam (36), into the blade-shaped beam (14) inciding against the edge (12) of the insert, through two reflections having angles which are respectively, the first the sum of 90° and the inclina tion angle of the blade-shaped beam (41) in respect to a supporting plane (88) of the insert and the second the double of said inclination angle, and the rotation of the revolving head (98) allowing to move said beam (14) along the edges (12) of the insert (10).

5. An imaging system according to Claim 4, characterized in that the inclination angle between the said blade-shaped beam (14) and     said supporting plane (88) is selected equal to 30° in a manner that the reflection angles of the two mirrors (100, 102) are 120° and 60° respectively.

6. An imaging system according to Claims 4 and 5, charactarized in that said revolving head (98) is moved by an adjustable speed electric motor.

7. An imaging system according to Claim 4, characterized in that the light diffused from the edges (12) of the insert (10) is is collected by an optical-electronic device (86) which, preferably, is a charge coupled solid state device.

8. An imaging system according to Claims 4 and 7, characterized in that to allow the inspection of the edges of inserts which have diffe rent dimensions, by the use of a focusing system comprising an optical group (80) having fixed focal distance, also the distance between said optical group (80) and the said edge (12) of the insert is kept fixed, in a manner that,when owing to changes of the dimensions of the insert (10),the dstance between insert (10) and revolving head (98) will change of a given value in a direction, the distance between optical group (80) and revolving head (98)will change of the equal value in opposite direction.

9. An imaging system according to Claim 8, characterized in that the distance between the optical group (80) and revolving  head (98) and the distance between revolving head (98) and supporting plane (88) are changed in such a manner that to a change "h" of the distance between revolving head (98) and supporting plane (88) will correspond a change " $\frac{h}{\sin\alpha}$ " of the distance between optical group (80) and revolving head (98), wherein " $\alpha$ " is the inclination angle of the blade-shaped ray (14) in respect to the resting plane (88).

10. An illumination system of Claim 9, characterized in that the angle " $\alpha$ " is selected equal to 30° in such a manner that to a change "h" of the distance between revolving head (98) and resting plane (88) will correspond a change "2h" between optical group (80) and revolving head (98).

11. An imaging system according to Claim 9, characterized in that to obtain said distance changes is used a hollow sleeve (118), bearing the optical group (80), equipped with two threads (126, 128) having respectively opposite directions and different pitches which will permit the moving of the optical group (80) to a direction and that of the revolving head (98) to an opposite direction, so that indicating by "f" the pitch of the thread allowing the movement of the optical group (80) and by "F" the pitch of the thread allowing the motion of the revolving head (98), the ratio between said pitches is defined by the formula:

$$f = F (1 - \sin\alpha).$$

12. An imaging system according to Claim 11, characterized in that said distance changes are provided by two racks having tooth pitch ratio equal to the pitch ratio of the threads mentioned in said Claim 11.

13. An imaging system according to Claim 11, characterized in that the two distance changes are provided by two stepping motors, having revolution ratio equal to the one mentioned in said Claim 11.

14. An imaging system according to Claims 11 to 13, wherein the angle " $\alpha$ " is made equal to 30° so that the ratio among the pitches of the threads and/or among the distance changes will resul $f = \frac{1}{2}F$.

0100446

1/4

Fig. 1

Fig. 2

Fig. 7

Fig. 3

Fig.6

0100446

4/4

Fig. 4

Fig. 5

European Patent Office

**EUROPEAN SEARCH REPORT**

Application number

EP 83 10 6422

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-U-7 903 488 (FUJI PHOTO OPTICAL CO.) * Claim 1; page 3, line 9 - page 4, line 8; page 6, last paragraph - page 7, line 6; page 8, line 10 - page 10, line 11; figure 1 * | 1,2 | G 01 N 21/88 |
| A | DE-A-3 123 184 (K.K. TOYOTA CHUO KENKYUSHO) * Claims 1-4; page 18, lines 3-32; page 42, lines 4-18; page 44, last paragraph; figures 4, 11-13 * | 1,2 | |
| A | DE-B-2 625 951 (SCHWEIZERISCHE ALUMINIUM AG) * Claim 1; column 3, lines 22-53; figures 1-3 * | 1,2 | |
| A | Patent Abstracts of Japan Vol. 5, no. 107, 11 July 1981 & JP-A-56-48545 | 1 | TECHNICAL FIELDS SEARCHED (Int. Cl. 3) |
| A | US-A-4 139 306 (J.F. NORTON) * Claim 1; abstract; column 1, lines 30-52; figure 1 * | 1 | G 01 M 11/00 G 01 N 21/00 G 01 N 33/20 |

The present search report has been drawn up for all claims

| Place of search | Date of completion of the search | Examiner |
|---|---|---|
| BERLIN | 12-10-1983 | HOFMANN D G |